# EUROPEAN PATENT SPECIFICATION

(11) **EP 2 619 025 B1**
(45) Date of publication and mention of the grant of the patent: **22.11.2017**
(21) Application number: 11826428.2
(22) Date of filing: 23.09.2011
(51) Int. Cl.: B60L 15/20, F16H 61/02, F16H 3/091

(54) **DRIVING SYSTEM FOR ELECTRIC VEHICLE**
ANTRIEBSSYSTEM FÜR EIN ELEKTROFAHRZEUG
SYSTÈME D'ENTRAÎNEMENT POUR VÉHICULE ÉLECTRIQUE

(30) Priority: 05.08.2011 CN 201110225534; 26.09.2010 CN 201010291549
(43) Date of publication of application: 31.07.2013
(73) Proprietor: BYD Company Limited, Shenzhen, Guangdong 518118 (CN); Shenzhen BYD Auto R&D Company Limited, Shenzhen, Guangdong 518118 (CN)
(72) Inventor: REN, Yi, Guangdong 518118 (CN); NIU, Ruru, Guangdong 518118 (CN); HAN, Zhengguang, Guangdong 518118 (CN); TANG, Zhouping, Guangdong 518118 (CN); LI, Wei, Guangdong 518118 (CN); KE, Feng, Guangdong 518118 (CN); YANG, Shenglin, Guangdong 518118 (CN); DONG, Shibo, Guangdong 518118 (CN)
(74) Representative: Grunert, Marcus
(86) International application number: PCT/CN2011/080136
(87) International publication number: WO 2012/037901

(56) References cited:
- CN-U- 201 800 540
- CN-Y- 201 036 975
- CN-Y- 201 261 389
- CN-Y- 201 423 920
- DE-A1- 19 917 724
- DE-A1-102008 042 441
- JP-A- 2002 048 197
- JP-A- 2007 261 491
- US-A- 4 283 968
- US-A- 5 623 851
- US-A- 5 827 148
- US-A1- 2008 277 230

## Description

### FIELD

The present disclosure relates to a vehicle field, more particularly to a driving system of an electric vehicle.

### BACKGROUND

Due to the increasing of fuel price and the environmental pollution caused by conventional vehicles, an electric vehicle has attracted more and more attention. A power battery is used as a power source of the electric vehicle, and the electric vehicle is driven by an electric motor, thus avoiding limitation of the engine and reducing the environmental pollution.

Conventionally, the electric vehicle may be driven by a driving motor and a reducer with a constant transmission ratio. As is well known, the driving motor has a high output torque and a low efficiency at a low rotational speed. With the increasing of the rotational speed of the driving motor, the efficiency is increased gradually, but the output torque is much lower. With the electric vehicle comprising the reducer with a constant transmission ratio, for the reducer with a high torque, the efficiency is increased slowly with the increasing of the rotational speed of the driving motor, and consequently the power consumption of the vehicle is quite large at a high speed; and for the reducer with a high rotational speed, the efficiency is increased fast with the increasing of the rotational speed of the driving motor. However, due to the low transmission ratio of the reducer, the torque transmitted to the wheels is too low to satisfy the requirement of the vehicle when it is starting or climbing. As a result, the power consumption of the vehicle is quite large at a low rotational speed. For example, the electric bus may need frequent parking, starting or acceleration, which may cause the low efficiency of the driving motor. Therefore, the driving system of the conventional electric vehicle is difficult to meet the work conditions for low speed and high speed simultaneously, thus the driving motor has a low efficiency, which may shorten the driving range of the electric vehicle if the power storage of the battery is not changed. As a result, the conventional electric vehicle may not be applied to complicated driving conditions.

Japanese Patent Application No. JP 2002 048197 A discloses a running bogie having a driving motor and a transmission structure, where axle shafts of both right and left wheels are respectively connected with a pair of right and left side gears of a differential gear. A gear wheal type, two-stage transmitting gear box capable of switching to a first speed and a second speed is arranged between a ring gear of the differential gear unit and a drive gear installed on a rotation shaft of the driving motor. With such a transmission structure it is difficult to meet the work conditions for low speed and high speed simultaneously.

### SUMMARY

In viewing thereof, the present disclosure is directed to solve at least one of the problems existing in the prior art. Accordingly, a driving system of an electric vehicle may need to be provided, which may match the torque and rotational speed characteristics of the driving motor appropriately to effectively improve the efficiencies of the driving motor under different driving or running conditions.

According to the present invention, a driving system according to claim 1, which is suitable for an electric vehicle is provided.

With the driving system of the electric vehicle according to an embodiment of the present disclosure, the transmission has a first transmission unit and a second transmission unit. The first transmission ratio of the first transmission unit is greater than the second transmission ratio of the second transmission unit. Therefore, the driving motor may transmit power to the wheels selectively by the first transmission unit or the second transmission unit. For example, when the electric vehicle is running at a low speed, the first transmission unit is selected to output a high torque; and when the electric vehicle is running at a high speed, the second transmission unit is selected instead. Thus, by selecting different transmission units according to different driving conditions, the torque and rotational speed characteristics of the driving motor may be appropriately matched so as to effectively improve the efficiencies of the driving motor and improve the service efficiency of the power battery, thus meeting the complicated driving conditions of the vehicle.

Additional aspects and advantages of the embodiments of the present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of the disclosure will become apparent and more readily appreciated from the following descriptions taken in conjunction with the drawings in which:
Fig. 1 is a schematic diagram illustrating a driving system of an electric vehicle according to an embodiment of the present disclosure;
Fig. 2 is a sectional view of a transmission in the driving system shown in Fig. 1; and
Fig. 3 is a schematic diagram illustrating a hydraulic system in the driving system shown in Fig. 1.

### DETAILED DESCRIPTION

Reference will be made in detail to embodiments of the present disclosure. The embodiments described herein with reference to drawings are explanatory, illustrative, and used to generally understand the present disclosure. The embodiments shall not be construed to limit the present disclosure. The same or similar elements and the elements having same or similar functions are denoted by like reference numerals throughout the descriptions.

In the description, it should be understood that, relative terms "central", "longitudinal", "transversal", "upper", "lower", "front", "back", "left", "right", "vertical", "horizontal", "top", "bottom", "inner", "external", etc., should be construed to refer to the orientation as then described or as shown in the drawings under discussion. These relative terms are for convenience of description and do not require that the present disclosure be constructed or operated in a particular orientation.

In addition, the terms "first" and "second" are only used for description and can not be construed to explicitly or implicitly refer to the relative importance or implicitly indicate the quality of technical features. Thus, the features defined by "first" and "second" may explicitly or implicitly comprise one or more features. In the description, unless otherwise indicated, the term "a plurality of" means two or more.

In the description as described hereinafter, it should be understood that, terms concerning attachments, coupling and the like, such as "connected" and "interconnected", refer to a relationship in which structures are secured or attached to one another either directly or indirectly through intervening structures, as well as both movable or rigid attachments or relationships, unless expressly described otherwise.

The driving system of the electric vehicle according to embodiments of the present disclosure will be described with reference to the drawings.

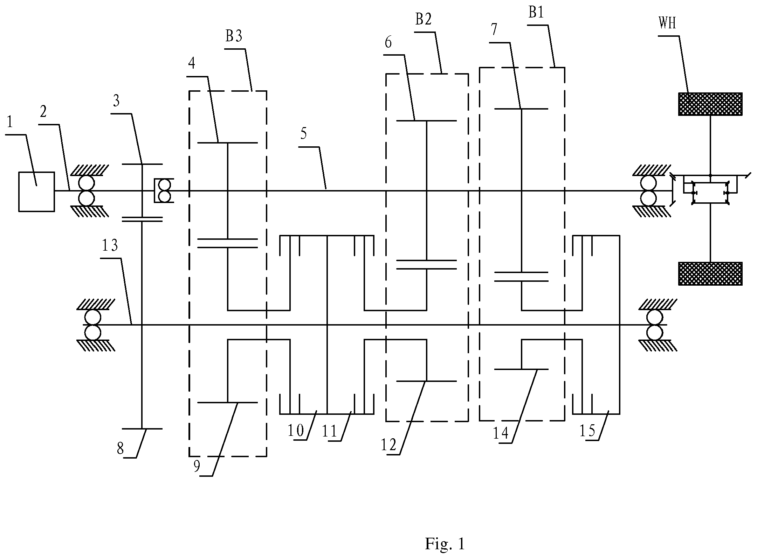

As shown in Figs. 1-3, the driving system of the electric vehicle comprises a driving motor 1, a transmission and a hydraulic system.

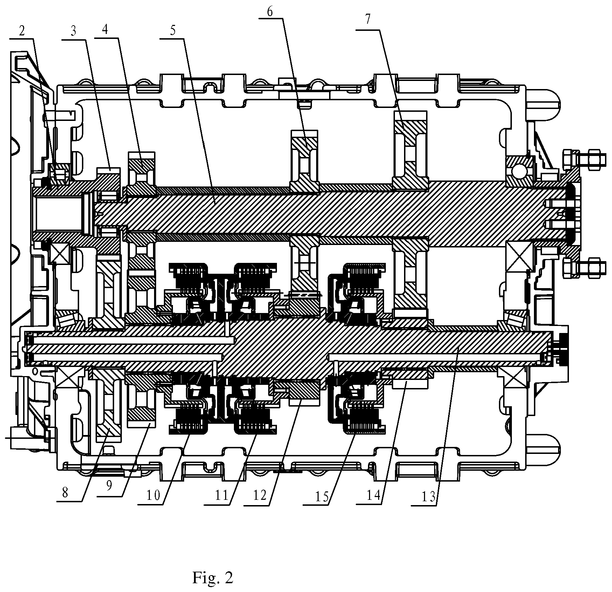

Particularly, the transmission may have an input shaft 2, a countershaft 13, an output shaft 5, a first transmission unit B1, a first clutch 15, a second transmission unit B2 and a second clutch 11. In one embodiment, the driving motor 1 is coupled to the input shaft 2 to drive the input shaft 2 to rotate. In one embodiment, the driving motor 1 is connected or coupled to the input shaft 2 via a spline, as shown in Fig. 2. However, the present disclosure is not limited hereto. In another embodiment, the driving motor 1 may be directly coupled to the input shaft 2 in other manners. The electric vehicle using the driving system according to an embodiment of the present disclosure in which the driving motor 1 is directly coupled to the input shaft 2 differs from the conventional vehicle adopting an engine in that there are no clutches and torque converters between the driving motor 1 and the input shaft 2, which may improve the power transmission efficiency and simplify the structure thereof.

The input shaft 2 is connected to the countershaft 13 to provide power from the driving motor 1 to the countershaft 13. In one embodiment, the input shaft 2 is coupled to the countershaft 13 via a gear pair comprising a first gear 3 and a second gear 8. The first gear 3 is disposed on the input shaft 2, the second gear 8 is disposed on the countershaft 13, and the first gear 3 and the second gear 8 may be engaged with each other.

The first transmission unit B1 is disposed between the countershaft 13 and the output shaft 5 to transmit power between the countershaft 13 and the output shaft 5. The second transmission unit B2 is disposed between the countershaft 13 and the output shaft 5 to transmit power between the countershaft 13 and the output shaft 5.

The first clutch 15 is disposed on the countershaft 13 and connected to the first transmission unit B1 for switching on or off the power transmission between the countershaft 13 and the first transmission unit B1. In other words, the first clutch 15 may be configured to link or cut off the power transmission between the countershaft 13 and the output shaft 5.

The second clutch 11 is disposed on the countershaft 13 and connected or coupled to the second transmission unit B2 for switching on or off the power transmission between the countershaft 13 and the second transmission unit B2. In other words, the second clutch 11 may be configured to link or cut off the power transmission between the countershaft 13 and the output shaft 5. The first transmission unit B1 has a first transmission ratio which is greater than a second transmission ratio of the second transmission unit B2.

The hydraulic system is connected to the first clutch 15 and the second clutch 13 to engage or disengage the first clutch 15and the second clutch 11 respectively.

With the driving system of the electric vehicle according to an embodiment of the present disclosure, the transmission has the first transmission unit B1 and the second transmission unit B2, and the first transmission ratio of the first transmission unit B1 is greater than the second transmission ratio of the second transmission unit B2, which may appropriately match the torque and rotational speed characteristics of the driving motor so as to effectively improve the efficiencies of the driving motor under different driving conditions. Therefore, the energy may be saved, the driving range of vehicles may be increased, and the structure of the driving system may be simplified. More particularly, when the electric vehicle is running at a low speed, such as starting, climbing or accelerating, high output torque may be needed, and the hydraulic system may engage the first clutch 15. In other words, when the vehicle is switched to a first forward gear position, the power from the driving motor 1 is transmitted to the input shaft 2, then the power is transmitted from the input shaft 2 to the countershaft 13 via the first gear 3 and the second gear 8, then the power is transmitted from the countershaft 13 to the output shaft 5 via the first clutch 15 and the first transmission unit B1, and finally the power is transmitted from the output shaft 5 to the wheels WH. Because the first transmission unit B1 has a higher transmission ratio, the torque transmitted to the wheels WH is high, thus meeting the requirement for high output torque. When the speed of the electric vehicle is increased, low output torque may be needed, and the hydraulic system may disengage the first clutch 15 and engage the second clutch 11. In other words, when the vehicle is switched to a second forward gear position, the power is transmitted from the countershaft 13 to the output shaft 5 via the second clutch 11 and the second transmission unit B2. Because the second transmission unit B2 has a lower transmission ratio, the torque transmitted to the wheels WH is decreased and the rotational speed of the wheels WH is increased, thus meeting the requirement for low output torque and high output rotational speed.

When the vehicle needs to be reversed or backed, the driving motor 1 may reversely rotate, and the hydraulic system may disengage the second clutch 11 and engage the first clutch 15. In other words, when the vehicle is switched to the reverse gear position, the power is transmitted to the wheels WH via the first clutch 15 and the first transmission unit B1. Because high output torque is needed for the reversing of the vehicle, it is better to engage the first clutch 15 to transmit power via the first transmission unit B1 having a higher transmission ratio.

As mentioned above, by selecting suitable transmission units, the torque and rotational speed characteristics of the driving motor 1 may be appropriately matched so as to effectively improve the efficiencies of the driving motor under different driving conditions, thus saving the energy and increasing the driving range of electric vehicles. Therefore, the electric vehicle may have characteristics similar to those of the conventional vehicle using an engine.

As described hereinabove, the driving system of the electric vehicle according to an embodiment of the present disclosure has the first transmission unit B1 and the second transmission unit B2, that is to say, the vehicle has two forward gear positions and one reverse gear position. It should be understood that, the present disclosure is not limited hereto. In some embodiments, the driving system may have suitable number of transmission units, such as three or four transmission units.

As shown in Figs. 1-3, in one embodiment, the transmission may further comprise a third transmission unit B3 and a third clutch 10. The third transmission unit B3 is disposed between the countershaft 13 and the output shaft 5 to transmit power between the countershaft 13 and the output shaft 5. The third clutch 10 is disposed on the countershaft 13 and connected to third transmission unit B3 to switch on or off the power transmission between the countershaft 13 and the third transmission unit B3. In other words, the third clutch 10 is configured to link or cut off the power transmission between the countershaft 13 and the output shaft 5. The hydraulic system is connected to the third clutch 10 to engage or disengage the third clutch 10. The third transmission unit B3 may have a third transmission ratio. The second transmission ratio is greater than the third transmission ratio.

For example, when the speed of the vehicle is further increased, the hydraulic system disengages the first clutch 15 and the second clutch 11, and engages the third clutch 10. In other words, the vehicle is switched to the third forward gear position, so that the power may be transmitted from the countershaft 13 to the output shaft 5 via the third transmission unit B3. Compared with the second transmission unit B2 and the first transmission unit B1, the third transmission unit B3 has a lower transmission ratio, the output torque is much lower, but the rotational speed is much higher. Therefore, when the speed of the vehicle is further increased, the power may be transmitted via the third clutch 10 and the third transmission unit B3, thus further improving the efficiency of the driving motor 1 and reducing the energy consumption.

In some embodiments, the first clutch 15, the second clutch 11 and the third clutch 10 each may be a wet clutch. As shown in Fig. 1 and Fig. 2, the input shaft 2 and the output shaft 5 are coaxial, and the axis of the countershaft 13 is parallel with those of the input shaft 2 and the output shaft 5, which may reduce the size of the transmission. Therefore, the transmission may have a compact structure, thus saving space.

As shown in Fig. 1 and Fig. 2, the second clutch 11 and the third clutch 10 share a driving part. Thus, the size of the transmission may be further reduced, simplifying the structure of the transmission and reducing the manufacturing cost thereof. In the embodiment shown in Fig. 1 and Fig. 2, the first clutch 15 and the first transmission unit B1 are closest to the wheel WH, the third clutch 10 and the third transmission unit B3 are furthest from the wheels WH, and the second clutch 11 and the second transmission unit B2 are disposed between the first clutch 15 and the third clutch 10. However, the present disclosure is not limited hereto. It should be understood that, the first clutch 15, the second clutch 11 and the third clutch 10 may be arranged according to specific application by any person skilled in the art.

As shown in Fig. 1 and Fig. 2, in some embodiments, the first transmission unit B1 comprises a third gear 14 disposed on the countershaft 13 and a fourth gear 7 disposed on the output shaft 5 and engaged with the third gear 14. The third gear 14 and the fourth gear 7 may be cylindrical gears. Therefore, the structure of the first transmission unit B1 is simple. The third gear 14 may be rotatably provided over the countershaft 13, and the fourth gear 7 is fixed to the output shaft 5. A driving part of the first clutch 15 is fixed to the countershaft 13, and a driven part of the first clutch 15 is connected to the third gear 14.

The second transmission unit B2 comprises a fifth gear 12 disposed on the countershaft 13 and a sixth gear 6 disposed on the output shaft 5 and engaged with the fifth gear 12. The fifth gear 12 may be rotatably provided over the countershaft 13, and the sixth gear 6 is fixed to the output shaft 5. A driving part of the second clutch 11 is fixed to the countershaft 13, and a driven part of the second clutch 11 is connected to the fifth gear 12.

The third transmission unit B3 comprises a seventh gear 9 disposed on the countershaft 13 and an eighth gear 4 disposed on the output shaft 5 and engaged with the seventh gear 9. The seventh gear 9 may be rotatably provided over the countershaft 13, and the eighth gear 4 is fixed to the output shaft 5. A driving part of the third clutch 10 is fixed to the countershaft 13, and a driven part of the third clutch 10 is connected to the seventh gear 9.

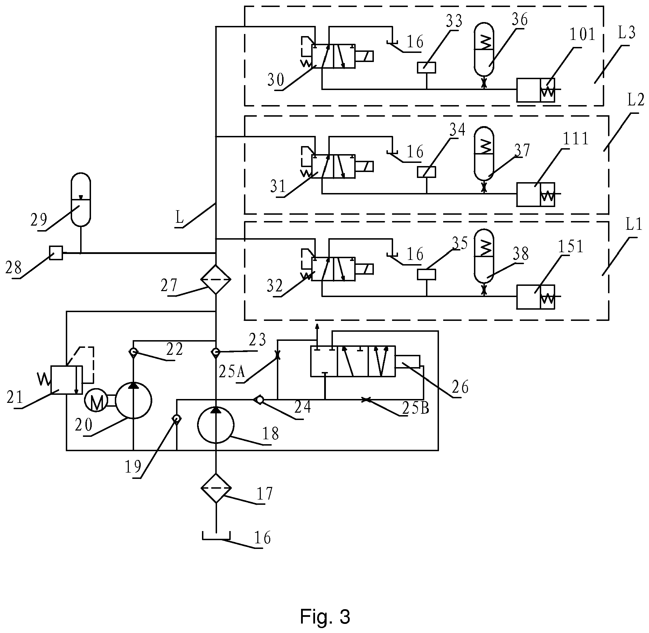

The hydraulic system in the driving system of the electric vehicle will be described below with reference to Fig. 3.

As shown in Fig. 3, the hydraulic system comprises an oil container 16, a first clutch driving loop L1 for driving the first clutch 15, a second clutch driving loop L2 for driving the second clutch 11, a third clutch driving loop L3 for driving the third clutch 10, an inner pump 18, a first check valve 23 connected to the outlet of the inner pump 18 in series, an external pump 20, and a second check valve 22 connected to the outlet of the external pump 20 in series.

It should be understood that, when the transmission only has the first transmission unit B1 and the second transmission unit B2, the third clutch driving loop L3 may not be needed. When the transmission has more than three transmission units, corresponding clutch driving loops may be additionally added.

As shown in Fig. 3, the first clutch driving loop L1, the second clutch driving loop L2 and the third clutch driving loop L3 are connected in parallel to each other.

The first clutch driving loop L1 comprises a first hydraulic cylinder 151 and a first proportional valve 32. For example, the first proportional valve 32 may be a two-position three-way solenoid valve. In some embodiments, the first clutch driving loop L1 may further comprise a first buffer 38 disposed between the first proportional valve 32 and first hydraulic cylinder 151. Alternatively, a first oil pressure sensor 35 may be disposed between the first buffer 38 and the first proportional valve 32 for measuring the oil pressure in the first clutch driving loop L1.

Similarly, the second clutch driving loop L2 may comprise a second hydraulic cylinder 111 and a second proportional valve 31. In some embodiments, the second clutch driving loop L2 further comprises a second buffer 37 disposed between the second proportional valve 31 and the second hydraulic cylinder 111. Alternatively, a second oil pressure sensor 34 may be disposed between the second buffer 37 and the second proportional valve 31 for measuring the oil pressure in the second clutch driving loop L2.

The third clutch driving loop L3 may comprise a third hydraulic cylinder 101 and a third proportional valve 30. In some embodiments, the third clutch driving loop L3 further comprises a third buffer 36 disposed between the third proportional valve 30 and the third hydraulic cylinder 101. Alternatively, a third oil pressure sensor 33 may be disposed between the third buffer 36 and the third proportional valve 30 for measuring the oil pressure in the third clutch driving loop L3.

As shown in Fig. 3, the first proportional valve 32 is connected to the first hydraulic cylinder 151 and the oil container 16 respectively. The second proportional valve 31 is connected to the second hydraulic cylinder 111 and the oil container 16 respectively. The third proportional valve 30 is connected to the third hydraulic cylinder 101 and the oil container 16 respectively. A piston of the first hydraulic cylinder 151 is connected to the driving part of the first clutch 15 to engage or disengage the first clutch 15. A piston of the second hydraulic cylinder 111 is connected to the driving part of the second clutch 11 to engage or disengage the second clutch 11. A piston of the third hydraulic cylinder 101 is connected to the driving part of the third clutch 10 to engage or disengage the third clutch 10.

The inner pump 18 may be driven by the countershaft 13, and the external pump 20 may be driven by an external motor M. Both the inlets of the inner pump 18 and the external pump 20 may be connected to the oil container 16. In one embodiment, a first filter 17 is disposed between the oil container 16 and the inlets of the inner pump 18 and the external pump 20. The outlets of the inner pump 18 and the external pump 20 may be respectively connected to the first proportion valve 32, the second proportional valve 31 and the third proportion valve 30. In one embodiment, a second filter 27 is disposed between the outlets of the inner pump 18 and the external pump 20 and the first second and third proportion valves 32, 31, 30. The filtration accuracy of the second filter 27 is higher than that of the first filter 17, thus further improving the cleanness of the hydraulic oil in the first, second and third proportional valves 32, 31, 30.

The inner pump 18 is connected in parallel to the external pump 20. The first check valve 23 is connected to the outlet of the inner pump 18 in series. The second check valve 22 is connected to the outlet of the external pump 20 in series. The first check valve 23 and the inner pump 18 serially connected to each other and the second check valve 22 and the external pump 20 serially connected to each other are connected in parallel between the oil container 16 and the first, second and third proportional valves 32, 31, 30.

In some embodiments, the hydraulic system further comprises an accumulator 29 connected between the first and second check valves 23, 22 and the first, second and third proportional valves 32, 31, 30 and a main oil pressure sensor 28 for measuring the oil pressure in the main oil line L of the hydraulic system.

The hydraulic system may further comprise a relief valve 21. The relief valve 21 is connected in parallel with the first check valve 23 and the inner pump 18 serially connected to each other and the external pump 20 and the second check valve 22 serially connected to each other for relieving the hydraulic oil in the main oil line L to the oil container 16. In some embodiments, the hydraulic system further comprises a pressure regulating valve 26. The pressure regulating valve 26 is connected in parallel with the inner pump 18 to provide a lubricating oil to the driving system such as each of gear pairs in the transmission or bearings. A fourth check valve 24 is disposed between the inner pump 18 and the outlet of the pressure regulating valve 26 for creating backsuction to the pressure regulating valve 26 when the inner pump 18 is reversely rotated. Two damping elements 25A and 25B are connected to the pressure regulating valve 26 in serials. After the vehicle is starting, the oil amount from the inner pump 18 may be increased gradually, and due to the functions of the damping elements 25A and 25B and after compensating the possible slight leakage inside the pressure regulating valve 26, the hydraulic oil pressure in the main oil line L is quickly increased.

In another embodiment, a third check valve 19 is connected in parallel with the inner pump 18 for preventing suction during the backsuction of the inner pump 18.

The operation of the hydraulic system in the driving system according to an embodiment of the present disclosure will be described below.

As shown in Fig. 2, after the hydraulic system is started, the inner pump 18 and/or the external pump 20 may absorb oil from the oil container 16 via the first filter 17. The hydraulic oil may flow into the main oil line L, then flow into one of the first clutch driving loop L1, the second clutch driving loop L2 and the third clutch driving loop L3, i.e., driving one of the first hydraulic cylinder 151, the second hydraulic cylinder 111 and the third hydraulic cylinder 101.

For description convenience, the operation for driving the first hydraulic cylinder 151 will be described as an example. It may be understood that, the operation for driving the first hydraulic cylinder 151 may also be applied to the second clutch driving loop L2 and the third clutch driving loop L3. The piston of the first hydraulic cylinder 151 may compress a return spring under the hydraulic oil pressure to push the driving part and driven part of the first clutch 15 to partly engage with each other, so that the power may be transmitted from the countershaft 13 to the output shaft 5 via the first clutch 15 (that is, via the third gear 14 and the fourth gear 7) and finally may be transmitted to the wheels WH. When the first clutch 15 is disengaged, the hydraulic oil may connect to the oil container 16, the oil pressure in the first hydraulic cylinder 151 may be decreased quickly, and the piston of the first hydraulic cylinder 15 may move quickly under the push of the return spring, so that the hydraulic oil may flow into the oil container 16. Therefore, the driving part and the driven part of the first clutch 15 may be disengaged from each other, thus cutting off the power transmission between the countershaft 13 and the output shaft 5.

With the driving system according to an embodiment of the present disclosure, generally, the inner pump 18 is adopted to supply oil, the inner pump 18 may be driven by the countershaft 13, and the first check valve 23 only allows the hydraulic oil to flow from the inner pump 18 into the first, second and third clutch driving loops L1, L2 and L3, thus preventing the oil pressure in the hydraulic system from impacting the operation of the inner pump 18 and preventing the hydraulic oil in the hydraulic system from reversely flowing.

In some embodiments, the third check valve 19 only allows the hydraulic oil to flow from the oil container 16 into the outlet of the inner pump 18, thus preventing suction during the backsuction of the inner pump 18. For example, when the vehicle is reversed, the inner pump 18 may reversely rotate, and then the outlet of the inner pump 18 may absorb oil from the oil container 16 via the third check valve 19, thus avoiding damage to the inner pump 18. In other words, an oil loop may be formed between the oil container 16, the first filter 17, the third check valve 19 and the inner pump 18 so as to avoid the suction of the inner pump 18.

The fourth check valve 24 only allows the hydraulic oil to flow from the inner pump 18 into the pressure regulating valve 26 to prevent the reverse flowing of the oil for lubricating.

In some embodiments, if the oil pressure in the inner pump 18 is too low, the external motor M is started to drive the external pump 20 which supplies oil pressure to the main oil line L of the hydraulic system. The second check valve 22 only allows the hydraulic oil to flow from the external pump 20 into the first, second and third clutch driving loops L1, L2 and L3, to prevent the oil pressure in the hydraulic system from impacting the operation of the external pump 20 and the hydraulic oil in the hydraulic system from reversely flowing.

The inner pump 18 may provide the hydraulic oil when the hydraulic system lacks the hydraulic oil, and the remaining oil in the inner pump 18 may be used as the lubricating oil or flow into the oil container 16. By disposing an accumulator 29, the external pump 20 may work intermittently, and as mentioned above, the relief valve 21 functions for relieving.

In the aforementioned hydraulic system, the pressure regulating valve 26 provides the lubricating oil to the lubricating system of the vehicles.

In some embodiments, the hydraulic oil may be provided by the external pump 20 driven by the external motor M and the inner pump 18 driven by the countershaft 13. By disposing the external pump 20, before the electric vehicle is started, the external pump 20 may provide oil to the first clutch 15 so as to engage the first clutch 15, thus realizing the zero rotational speed starting, having no idle condition, reducing the energy consumption of the electric vehicle, and improving the utilization rate of the electric power.

As described above, the accumulator 29 may be used for storing energy, and the pressure regulating valve 26 may be used for regulating the pressure of the hydraulic oil. When the electric vehicle is static and the inner pump 18 does not run, the pressure regulating valve 26 is closed. When the electric vehicle is started, the amount of the hydraulic oil in the inner pump 18 is slowly increased. After the hydraulic oil is dampened by damping elements 25A and 25B and compensates the possible slight leakage inside the pressure regulating valve 26, the pressure in the main oil line L is increased in a short time. When the electric vehicle is running, after the pressure in the main oil line L is increased, the amount of the oil for lubricating is gradually provided. After the pressure in the main oil line L is increased to a predetermined value, the hydraulic oil flows into the inlet of the inner pump 18, thus reducing the work load of the first filter 17.

When the vehicle is running, the excessive energy may be stored in the accumulator 29. The stored energy may be utilized to perform the gear shifting operation so as to improve the efficiency of the transmission.

With the driving system of the electric vehicle according to an embodiment of the present disclosure, the first clutch 15, the second clutch 11 and the third clutch 10 are all controlled by the hydraulic system, and the first clutch 15 may be engaged before the vehicle is started, so that the idling of the driving motor 1 may not exist after the vehicle is started. Only if the driving motor 1 starts to run, the power may be transmitted to the transmission, thus realizing the starting of zero rotational speed. As a result, the electric power loss may be reduced and the utilization rate of the electric power may be improved. Moreover, when the hydraulic oil provided by the inner pump 18 is not enough, the external pump 20 may be used for supplying the hydraulic oil, thus improving the performance of the electric vehicles.

Therefore, with the driving system according to an embodiment of the present disclosure, the starting of zero rotational speed may be realized. According to the pedaling degree and the velocity change, the gear position may be automatically switched, which may appropriately match the torque and rotational speed characteristics of the driving motor to effectively improve the efficiencies of the driving motor under different driving conditions. The efficiencies of the driving motor may be optimized under different driving conditions to reduce energy consumption and increase the driving range of the electric vehicle. For example, the driving system is especially suitable for an electric bus, which may need frequent acceleration, deceleration, parking and starting.

The operation of the driving system according to an embodiment of the present disclosure will be described with reference to Fig. 1. In the following, the transmission in the driving system comprising the first, second and third transmission units B1, B2 and B3 will be described as an example, however, it would be appreciated by any person skilled in the art that, the transmission in the driving system according to an embodiment of the present disclosure may comprise more than three transmission units.

Firstly, the parking structure of the driving system according to an embodiment of the present disclosure will be described with reference to Fig. 1. When the electric vehicle runs in a parking state, the driving part of the first clutch 15 is disengaged from the driven part thereof, the driving part of the second clutch 11 is disengaged from the driven part thereof, and the driving part of the third clutch 10 is disengaged from the driven part thereof, that is, the three clutches are all disengaged and the power transmission from the driving motor 1 to the output shaft 5 is cut off.

Then, the first forward gear of the driving system according to an embodiment of the present disclosure will be described with reference to Fig. 1. When the electric vehicle is in a starting state or is running at a low speed, a shifting control system may disengage the second clutch 11 and the third clutch 10 via a shifting mechanism, and engage the driving part and the driven part of the first clutch 15. Therefore, the power transmission line of the first forward gear is as follows: the driving motor 1→the input shaft 2→the first gear 2→the second gear 2→the countershaft 13→the first clutch 15→the third gear 14→the fourth gear 2→the output shaft 5. At the moment, the rotational speed of the driving motor 1 is lower, the output torque is the highest, the transmission ratio is the highest, and the power transmitted to the wheels is the highest. The shifting control system and the shifting mechanism are known to any person skilled in the art, so that a detailed description thereof is omitted here for clarity purpose.

Then, the second forward gear of the driving system according to an embodiment of the present disclosure will be described with reference to Fig. 1. When the electric vehicle is running at a moderate speed, the shifting control system may disengage the first clutch 15 and the third clutch 10 via the shifting mechanism, and engage the driving part and the driven part of the second clutch 11. For example, when the first forward gear is shifted to the second forward gear, the shifting control system may sense the current driving state of the electric vehicle via corresponding sensors, so that the running shift of the electric vehicle may be determined. When the first clutch 15 is disengaged, the second clutch 11 is engaged, so as to achieve the aim of shifting gears. The power transmission line of the second forward gear is as follows: the driving motor 1→the input shaft 2→the first gear 2→the second gear 2→the countershaft 13→the second clutch 11→the fifth gear 12→the sixth gear 2→the output gear 5. At the moment, the higher the transmission ratio, the lower the efficiency of the driving motor 1 is. And compared with the first forward gear, the transmission ratio of the second forward gear is lower, the efficiency of the driving motor 2 is higher, and the energy utilization rate is higher.

Then, the third forward gear of the driving system according to an embodiment of the present disclosure will be described with reference to Fig. 1. When the electric vehicle is running at a high speed, the shifting control system may disengage the first clutch 15 and the second clutch 11 via the shifting mechanism, and engage the driving part and the driven part of the third clutch 10. For example, when the second forward gear is shifted to the third forward gear, which is similar to that of the first forward gear being shifted to the second forward gear, when the second clutch 11 is disengaged, the third clutch 10 is engaged. The power transmission line of the third forward gear is: the driving motor 1→the input shaft 2→the first gear 2→the second gear 2→the countershaft 13→ the third clutch 10→the seventh gear 2→the eighth gear 2→the output shaft 5. At the moment, the higher the transmission ratio, the lower the efficiency of the driving motor is. Therefore, compared with the first forward gear and the second forward gear, the transmission ratio of the third forward gear is lowest, and the energy utilization rate is highest.

Finally, the reversing of the driving system according to an embodiment of the present disclosure will be described with reference to Fig. 1. When the electric vehicle is reversed, the shifting control system may disengage the second clutch 11 and the third clutch 10 via the shifting mechanism, and engage the driving part and the driven part of the first clutch 15. Certainly, the driving motor 1 may reversely rotate during the reversing of the electric vehicle. The power transmission line of the reverse gear is as follows: the driving motor 1→the input shaft 2→the first gear 2→the second gear 2→the countershaft 13→the first clutch 15→the third gear 14→the fourth gear 7→the output gear 5.

According to embodiments of the present disclosure, the driving system of the electric vehicle comprises at least two transmission units, which may meet various complicated driving conditions for the vehicle. Therefore, the energy may be saved, and the driving system of the electric vehicle may have simplified structure.

In aforementioned embodiments, the transmission may provide three forward gears and a reverse gear, which may not only meet the requirement for high output torque when the vehicle is starting or climbing, but also meet the requirement for maximum output speed when the vehicle is running on a smooth road. The output torque needs to be quite high when the vehicle is started, climbing or accelerating. Therefore, the gear of the transmission may be shifted to a low-speed gear, that is, the first forward gear or the second forward gear. Because the transmission ratio in the low speed gear is quite high, the torque transmitted to the wheels is quite high. When the electric vehicle is running at a high speed on the smooth road, the gear of the transmission may be shifted to a high speed gear, that is, for example in this embodiment, the third forward gear. At that moment, the transmission ratio of the transmission is quite low so that the torque transmitted to the wheels is low, but the rotational speed of the wheels may be increased to maximum. Meanwhile, to a high speed gear, that is, for example in this embodiment, the third forward gear. At that moment, the transmission ratio of the transmission is quite low so that the torque transmitted to the wheels is low, but the rotational speed of the wheels may be increased to maximum. Meanwhile, the gear shifting may be appropriately controlled by the shifting control system, the torque and rotational speed characteristics of the driving motor may be matched ideally, and the efficiencies of the driving motor under different driving conditions may be optimized, thus saving the energy and increasing the driving range of the electric vehicles.

According to embodiments of the present disclosure, the three forward gears of the transmission may be mutually independent and the gear shifting may be realized by controlling the disengaging or engaging of the driving part and the driven part of each clutch. Furthermore, any person skilled in the art may reasonably control the gear shifting via the shifting control system so as to avoid the power interruption during the gear shifting process. Therefore, the speed deceleration of the vehicle may not be perceived during gear shifting. Compared with the conventional automotive transmission, the structure of the transmission in the driving system according to an embodiment of the present disclosure is simpler.

In addition, the second clutch and the third clutch share a driving part, so that the transmission may have a compact structure to save the installing space. Moreover, because the input shaft and the output shaft are coaxial, a parallel coaxial structure with simple structure may achieve the function of a conventional transmission with complicated structure comprising a rotation shaft (for example, a planetary gear), so that the driving system of the electric vehicle according to an embodiment of the present disclosure may be more compact in structure and lower in cost.

According to embodiments of the present disclosure, before the electric vehicle is started, the external pump in the driving system may drive the first clutch so as to realize the first forward gear, and then control the starting of the driving motor 1 to realize the zero rotational speed starting of vehicles.

Although explanatory embodiments have been shown and described, it would be appreciated by those skilled in the art that changes, alternatives, and modifications can be made in the embodiments without departing from the principles of the claimed invention. Such changes, alternatives, and modifications all fall into the scope of the appended claims.

## Claims

1. A driving system suitable for an electric vehicle, comprising:
a driving motor (1);
a transmission having: an input shaft (2), a countershaft (13), an output shaft (5), a first transmission unit (B1), a first clutch (15), a second transmission unit (B2), a second clutch (11), a third transmission unit (B3) and a third clutch (10), wherein the driving motor (1) is connected to and drives the input shaft (2), the input shaft (2) is connected to the countershaft (13) to provide power from the driving motor (1) to the countershaft (13), the first transmission unit (B1) is disposed between the countershaft (13) and the output shaft (5) to transmit power between the countershaft (13) and the output shaft (5), the second transmission unit (B2) is disposed between the countershaft (13) and the output shaft (5) to transmit power between the countershaft (13) and the output shaft (5), the first clutch (15) is disposed on the countershaft (13) and connected to the first transmission unit (B1) for linking or cutting off the power transmission between the countershaft (13) and the first transmission unit (B1), the second clutch (11) is disposed on the countershaft (13) and connected to the second transmission unit (B2) for linking or cutting off the power transmission between the countershaft (13) and the second transmission unit (B2), and a first transmission ratio of the first transmission unit (B1) is greater than a second transmission ratio of the second transmission unit (B2); and
a hydraulic system connected to the first clutch (15) to engage or disengage the first clutch (15) and connected to the second clutch (11) to engage or disengage the second clutch (11);
wherein the second clutch (11) and the third clutch (10) share a driving part,
the input shaft (2) and the output shaft (5) are coaxial, and the axis of the countershaft (13) is parallel with that of the input and output shafts (2, 5),
the third transmission unit (B3) is disposed between the countershaft (13) and the output shaft (5) to transmit power between the countershaft (13) and the output shaft (5),
the third clutch (10) is disposed on the countershaft (13) and connected to the third transmission unit (B3) for linking or cutting off the power transmission between the countershaft (13) and the third transmission unit (B3), and
the hydraulic system is connected with the third clutch (10) to engage or disengage the third clutch (10), the third transmission has a third transmission ratio, and the second transmission ratio is greater than the third transmission ratio.

2. The driving system of claim 1, wherein a first gear (3) is disposed on the input shaft (2), a second gear (8) engaged with the first gear (3) is disposed on the countershaft (13), and the input shaft (2) is connected to the countershaft (13) via the first gear (3) and the second gear (8).

3. The driving system of claim 1, wherein the first transmission unit (B1) comprises a third gear (14) disposed on the countershaft (13) and a fourth gear (7) disposed on the output shaft (5) and engaged with the third gear (14), the third gear (14) is rotatably provided over the countershaft (13), the fourth gear (7) is fixed to the output shaft (5), a driving part of the first clutch (15) is fixed to the countershaft (13), and a driven part of the first clutch (15) is connected to the third gear (14).

4. The driving system of claim 1, wherein the second transmission unit (B2) comprises a fifth gear (12) disposed on the countershaft (13) and a sixth gear (6) disposed on the output shaft (5) and engaged with the fifth gear (12), the fifth gear (12) is rotatably provided over the countershaft (13), the sixth gear (6) is fixed to the output shaft (5), a driving part of the second clutch (11) is fixed to the countershaft (13), and a driven part of the second clutch (11) is connected to the fifth gear (12).

5. The driving system of claim 1, wherein the third transmission unit (B3) comprises:
a seventh gear (9) disposed on the countershaft (13), and
an eighth gear (4) disposed on the output shaft (5) and engaged with the seventh gear (9),
wherein the seventh gear (9) is rotatably provided over the countershaft (13), the eighth gear (4) is fixed to the output shaft (5), a driving part of the third clutch (10) is fixed to the countershaft (13), and a driven part of the third clutch (10) is connected with the seventh gear (9).

6. The driving system of claim 1, wherein the first, second and third clutches (15, 11, 10) each is a wet clutch.

7. The driving system of claim 1, wherein the hydraulic system comprises:
an oil container (16);
a first clutch driving loop (L1) and a second clutch driving loop (L2) connected in parallel to each other, wherein the first clutch driving loop (L1) comprises a first hydraulic cylinder (151) and a first proportional valve (32), the first proportional valve (32) is connected to the first hydraulic cylinder (151) and the oil container (16) respectively, a piston of the first hydraulic cylinder (151) is connected to the driving part of the first clutch (15), the second clutch driving loop (L2) comprises a second hydraulic cylinder (111) and a second proportional valve (31), the second proportional valve (31) is connected to the second hydraulic cylinder (111) and the oil container (16) respectively, and a piston of the second hydraulic cylinder (111) is connected to the driving part of the second clutch (11);
an inner pump (18) driven by the countershaft (13) with an inlet thereof being connected to the oil container (16) and an outlet thereof being connected to the first and second proportional valves (32, 31) respectively;
a first check valve (23) connected to the outlet of the inner pump (18) in series;
an external pump (20) driven by an external motor with an inlet thereof being connected to the oil container (16) and an outlet thereof being connected to the first and second proportional valves (32, 31) respectively; and
a second check valve (22) connected to the outlet of the external pump (20) in series, wherein the first check valve (23) and the inner pump (18) serially connected to each other are connected in parallel with the second check valve (22) and the external pump (20) serially connected to each other between the first proportional valve (32) and the second proportional valve (31).

8. The driving system of claim 7, wherein the hydraulic system further comprises a third check valve (19) connected to the inner pump (18) in parallel.

9. The driving system of claim 8, wherein the hydraulic system further comprises:
a first filter (17) being connected between the oil container (16) and the inlets of the inner pump (18) and the external pump (20), and
a second filter (27) being connected between the first and second check valves (23, 22)and the first and second proportional valves (32, 31).

10. The driving system of claim 9, wherein the hydraulic system further comprises a relief valve (21) connected in parallel with a first series of the first check valve (23) and the inner pump (18) and with a second series of the external pump (20) and second check valve (22).

11. The driving system of claim 7, wherein the hydraulic system further comprises an accumulator (29) connected between the first and second check valves (23, 22) and the first and second proportional valves (32, 31).

12. The driving system of claim 11, wherein the first clutch driving loop (L1) further comprises a first buffer (38) disposed between the first proportional valve (32) and the first hydraulic cylinder (151), and the second clutch driving loop (L2) further comprises a second buffer (37) disposed between the second proportional valve (31) and the second hydraulic cylinder (111).

13. The driving system of claim 7, wherein the hydraulic system further comprises a pressure regulating valve (26) and a fourth check valve (24), the pressure regulating valve (26) is connected in parallel with the inner pump (18) to provide a lubricating oil to the driving system, and the fourth check valve (24) is connected between the inner pump (18) and the outlet of the pressure regulating valve (26).

## Patentansprüche

1. Antriebssystem, das für ein elektrisches Fahrzeug geeignet ist, umfassend:
einen Antriebsmotor (1);
ein Getriebe (1) mit: einer Eingangswelle (2), einer Gegenwelle (13), einer Ausgangsweille (5), einer ersten Getriebeeinheit (B1), einer ersten Kupplung (15), einer zweiten Getriebeeinheit (B2), einer zweiten Kupplung (11), einer dritten Getriebeeinheit (B3) und einer dritten Kupplung (10), wobei der Antriebsmotor (1) mit der Eingangswelle (2) verbunden ist und diese antreibt, wobei die Eingangswelle (2) mit der Gegenwelle (13) verbunden ist, um Kraft von dem Antriebsmotor (1) zu der Gegenwelle (13) bereitzustellen, wobei die erste Getriebeeinheit (B1) zwischen der Gegenwelle (13) und der Ausgangswelle (5) angeordnet ist, um Kraft zwischen der Gegenwelle (13) und der Ausgangswelle (5) zu übertragen, wobei die zweite Getriebeeinheit (B2) zwischen der Gegenwelle (13) und der Ausgangswelle (5) angeordnet ist, um Kraft zwischen der Gegenwelle (13) und der Ausgangswelle (5) zu übertragen, wobei die erste Kupplung (15) auf der Gegenwelle (13) angeordnet und mit der ersten Getriebeeinheit (B1) zum Verbinden oder Abtrennen der Kraftübertragung zwischen der Gegenwelle (13) und der ersten Getriebeeinheit (B1) verbunden ist, wobei die zweite Kupplung (11) auf der Gegenwelle (13) angeordnet und mit der zweiten Getriebeeinheit (B2) zum Verbinden oder Abtrennen der Kraftübertragung zwischen der Gegenwelle (13) und der zweiten Getriebeeinheit (B2) verbunden ist und ein erstes Übertragungsverhältnis der ersten Getriebeeinheit (B1) größer als ein zweites Übertragungsverhältnis der zweiten Getriebeeinheit (B2) ist; und
ein hydraulisches System, das mit der ersten Kupplung (15) verbunden ist, um die erste Kupplung (15) einzukuppeln oder auszukuppeln, und mit der zweiten Kupplung (11) verbunden ist, um die zweite Kupplung (11) einzukuppeln oder auszukuppeln;
wobei die zweite Kupplung (11) und die dritte Kupplung (10) einen Antriebsbestandteil teilen,
wobei die Eingangswelle (2) und die Ausgangswelle (5) koaxial sind, und die Achse der Gegenwelle (13) parallel zu der der Eingangs- und der Ausgangswelle (2, 5) ist,
wobei die dritte Getriebeeinheit (B3) zwischen der Gegenwelle (13) und der Ausgangswelle (5) angeordnet ist, um Kraft zwischen der Gegenwelle (13) und der Ausgangswelle (5) zu übertragen,
wobei die dritte Kupplung (10) auf der Gegenwelle (13) angeordnet und mit der dritten Getriebeeinheit (B3) zum Verbinden und Abtrennen der Kraftübertragung zwischen der Gegenwelle (13) und der dritten Getriebeeinheit (B3) verbunden ist und
wobei das hydraulische System mit der dritten Kupplung (10) verbunden ist, um die dritte Kupplung (10) einzukuppeln oder auszukuppeln, wobei die dritte Getriebeeinheit ein drittes Übertragungsverhältnis aufweist und das zweite Übertragungsverhältnis größer als das dritte Übertragungsverhältnis ist.

2. Antriebssystem nach Anspruch 1, wobei ein erstes Zahnrad (3) auf der Eingangswelle (2) angeordnet ist, ein zweites Zahnrad (8), das mit dem ersten Zahnrad (3) in Eingriff ist, auf der Gegenwelle (13) angeordnet ist und die Eingangswelle (2) mit der Gegenwelle (13) über das erste Zahnrad (3) und das zweite Zahnrad (8) verbunden ist.

3. Antriebssystem nach Anspruch 1, wobei die erste Getriebeeinheit (B1) ein drittes Zahnrad (14), das auf der Gegenwelle (13) angeordnet ist, und ein viertes Zahnrad, das auf der Ausgangswelle (5) angeordnet und mit dem dritten Zahnrad (14) in Eingriff ist, umfasst, wobei das dritte Zahnrad (14) drehbar über der Gegenwelle (13) bereitgestellt ist, das vierte Zahnrad (7) an der Ausgangswelle (5) befestigt ist, ein Antriebsbestandteil der ersten Kupplung (15) an der Gegenwelle (13) befestigt ist und ein angetriebener Bestandteil der ersten Kupplung (15) mit dem dritten Zahnrad (14) verbunden ist.

4. Antriebssystem nach Anspruch 1, wobei die zweite Getriebeeinheit (B2) ein fünftes Zahnrad (12), das auf der Gegenwelle (13) angeordnet ist und ein sechstes Zahnrad (6), das auf der Ausgangswelle (5) angeordnet und mit dem fünften Zahnrad (12) in Eingriff ist, umfasst, wobei das fünfte Zahnrad (12) drehbar über der Gegenwelle (13) bereitgestellt ist, das sechste Zahnrad (6) an der Ausgangswelle (5) befestigt ist, ein Antriebsbestandteil der zweiten Kupplung (11) an der Gegenwelle (13) befestigt ist und ein angetriebener Bestandteil der zweiten Kupplung (11) mit dem fünften Zahnrad (12) verbunden ist.

5. Antriebssystem nach Anspruch 1, wobei die dritte Getriebeeinheit (B3) umfasst:
ein siebtes Zahnrad (9), das auf der Gegenwelle (13) angeordnet ist, und
ein achtes Zahnrad (4), das auf der Ausgangswelle (5) angeordnet und mit dem siebten Zahnrad (9) in Eingriff ist,
wobei das siebte Zahnrad (9) drehbar über der Gegenwelle (13) bereitgestellt ist, das achte Zahnrad (4) an der Ausgangswelle (5) befestigt ist, ein Antriebsbestandteil der dritten Kupplung (10) an der Gegenwelle (13) befestigt ist und ein angetriebener Bestandteil der dritten Kupplung (10) mit dem siebten Zahnrad (9) verbunden ist.

6. Antriebssystem nach Anspruch 1, wobei die erste, zweite und dritte Kupplung (15, 11, 10) jeweils eine Nasskupplung ist.

7. Antriebssystem nach Anspruch 1, wobei das hydraulische System umfasst:
einen Ölbehälter (16);
eine erste Kupplungsantriebsschleife (L1) und eine zweite Kupplungsantriebsschleife (L2), die parallel zueinander verbunden sind, wobei die erste Kupplungsantriebsschleife (L1) einen ersten hydraulischen Zylinder (151) und ein erstes Proportionalventil (32) umfasst, wobei das erste Proportionalventil (32) jeweils mit dem ersten hydraulischen Zylinder (151) und dem Ölbehälter (16) verbunden ist, wobei ein Kolben des ersten hydraulischen Zylinders (151) mit dem Antriebsbestandteil der ersten Kupplung (15) verbunden ist, wobei die zweite Kupplungsantriebsschleife (L2) einen zweiten hydraulischen Zylinder (111) und ein zweites Proportionalventil (31) umfasst, wobei das zweite Proportionalventil (31) jeweils mit dem zweiten hydraulischen Zylinder (111) und dem Ölbehälter (16) verbunden ist und ein Kolben des zweiten hydraulischen Zylinders mit dem Antriebsbestandteil der zweiten Kupplung (11) verbunden ist;
eine innere Pumpe (18), die von der Gegenwelle (13) angetrieben wird, wobei ein Eingang davon mit dem Ölbehälter (16) verbunden ist und ein Ausgang davon jeweils mit dem ersten und dem zweiten Proportionalventil (32, 31) verbunden ist; und
ein erstes Überprüfungsventil (23), das mit dem Ausgang der inneren Pumpe (18) in Serie verbunden ist;
eine externe Pumpe (20), die von einem externen Motor angetrieben wird, wobei ein Eingang davon mit dem Ölbehälter (16) verbunden ist und ein Ausgang davon jeweils mit dem ersten und dem zweiten Proportionalventil (32, 31) verbunden ist; und
ein zweites Überprüfungsventil (22), das mit dem Ausgang der externen Pumpe (20) in Serie verbunden ist, wobei das erste Überprüfungsventil (23) und die innere Pumpe (18) seriell miteinander verbunden sind und parallel mit dem zweiten Überprüfungsventil (22) und der externen Pumpe (20), die seriell miteinander zwischen dem ersten Proportionalventil (32) und dem zweiten Proportionalventil (31) verbunden sind, verbunden sind.

8. Antriebssystem nach Anspruch 7, wobei das hydraulische System ferner ein drittes Überprüfungsventil (19) umfasst, das mit der inneren Pumpe (18) parallel verbunden ist.

9. Antriebssystem nach Anspruch 8, wobei das hydraulische System ferner umfasst:
einen ersten Filter (17), der mit dem Ölbehälter (16) und den Eingängen der inneren Pumpe (18) und der externen Pumpe (20) verbunden ist und
einen zweiten Filter (27), der zwischen dem ersten und zweiten Überprüfungsventil (23, 22) und dem ersten und zweiten Proportionalventil (32, 31) verbunden ist.

10. Antriebssystem nach Anspruch 9, wobei das hydraulische System ferner ein Überdruckventil (21) umfasst, das parallel mit einer ersten Serie des ersten Überprüfungsventils (23) und der inneren Pumpe (18) und mit einer zweiten Serie der externen Pumpe (20) und des zweiten Überprüfungsventils (22) verbunden ist.

11. Antriebssystem nach Anspruch 7, wobei das hydraulische System ferner einen Akkumulator (29) umfasst, der zwischen dem ersten und zweiten Überprüfungsventil (23, 22) und dem ersten und zweiten Proportionalventil (32, 31) verbunden ist.

12. Antriebssystem nach Anspruch 11, wobei die erste Kupplungsantriebsschleife (L1) ferner einen ersten Puffer (38) umfasst, der zwischen dem ersten Proportionalventil (32) und dem ersten hydraulischen Zylidner (151) angeordnet ist und die zweite Kupplungsantriebsschleife (L2) ferner einen zweiten Puffer (37) umfasst, der zwischen dem zweiten Proportionalventil (31) und dem zweiten hydraulischen Zylinder (111) angeordnet ist.

13. Antriebssystem nach Anspruch 7, wobei das hydraulische System ferner ein Druckregulierungsventil (26) und ein viertes Überprüfungsventil (24) umfasst, wobei das Druckregulierungsventil (26) parallel mit der inneren Pumpe (18) verbunden ist, um Schmieröl zu dem Antriebssystem bereitzustellen und das vierte Überprüfungsventil (24) mit der inneren Pumpe (18) und dem Ausgang des Druckregulierungsventils (26) verbunden ist.

## Revendications

1. Système d'entraînement adapté pour un véhicule électrique, comportant :
un moteur d'entraînement (1) ;
une transmission ayant : un arbre d'entrée (2), un contre-arbre (13), un arbre de sortie (5), une première unité de transmission (B1), un premier embrayage (15), une deuxième unité de transmission (B2), un deuxième embrayage (11), une troisième unité de transmission (B3) et un troisième embrayage (10), dans lequel le moteur d'entraînement (1) est relié à l'arbre d'entrée (2) et entraîne celui-ci, l'arbre d'entrée (2) est relié au contre-arbre (13) pour fournir au contre-arbre (13) de la puissance à partir du moteur d'entraînement (1), la première unité de transmission (B1) est disposée entre le contre-arbre (13) et l'arbre de sortie (5) pour transmettre de la puissance entre le contre-arbre (13) et l'arbre de sortie (5), la deuxième unité de transmission (B2) est disposée entre le contre-arbre (13) et l'arbre de sortie (5) pour transmettre de la puissance entre le contre-arbre (13) et l'arbre de sortie (5), le premier embrayage (15) est disposé sur le contre-arbre (13) et relié à la première unité de transmission (B1) pour établir ou couper la transmission de puissance entre le contre-arbre (13) et la première unité de transmission (B1), le deuxième embrayage (11) est disposé sur le contre-arbre (13) et relié à la deuxième unité de transmission (B2) pour établir ou couper la transmission de puissance entre le contre-arbre (13) et la deuxième unité de transmission (B2), et un premier rapport de transmission de la première unité de transmission (B1) est supérieur à un deuxième rapport de transmission de la deuxième unité de transmission (B2) ; et
un système hydraulique relié au premier embrayage (15) pour mettre en prise ou libérer le premier embrayage (15) et relié au deuxième embrayage (11) pour mettre en prise ou libérer le deuxième embrayage (11) ;
dans lequel le deuxième embrayage (11) et le troisième embrayage (10) partagent une partie d'entraînement,
l'arbre d'entrée (2) et l'arbre de sortie (5) sont coaxiaux, et l'axe du contre-arbre (13) est parallèle à celui des arbres d'entrée et de sortie (2, 5),
la troisième unité de transmission (B3) est disposée entre le contre-arbre (13) et l'arbre de sortie (5) pour transmettre de la puissance entre le contre-arbre (13) et l'arbre de sortie (5),
le troisième embrayage (10) est disposé sur le contre-arbre (13) et relié à la troisième unité de transmission (B3) pour établir ou couper la transmission de puissance entre le contre-arbre (13) et la troisième unité de transmission (B3), et
le système hydraulique est relié au troisième embrayage (10) pour mettre en prise ou libérer le troisième embrayage (10), la troisième unité de transmission a un troisième rapport de transmission, et le deuxième rapport de transmission est supérieur au troisième rapport de transmission.

2. Système d'entraînement selon la revendication 1, dans lequel un premier engrenage (3) est disposé sur l'arbre d'entrée (2), un deuxième engrenage (8) en prise avec le premier engrenage (3) est disposé sur le contre-arbre (13), et l'arbre d'entrée (2) est relié au contre-arbre (13) via le premier engrenage (3) et le deuxième engrenage (8).

3. Système d'entraînement selon la revendication 1, dans lequel la première unité de transmission (B1) comporte un troisième engrenage (14) disposé sur le contre-arbre (13) et un quatrième engrenage (7) disposé sur l'arbre de sortie (5) et en prise avec le troisième engrenage (14), le troisième engrenage (14) est agencé de manière rotative au-dessus du contre-arbre (13), le quatrième engrenage (7) est fixé à l'arbre de sortie (5), une partie d'entraînement du premier embrayage (15) est fixée au contre-arbre (13), et une partie entraînée du premier embrayage (15) est reliée au troisième engrenage (14).

4. Système d'entraînement selon la revendication 1, dans lequel la deuxième unité de transmission (B2) comporte un cinquième engrenage (12) disposé sur le contre-arbre (13) et un sixième engrenage (6) disposé sur l'arbre de sortie (5) et en prise avec le cinquième engrenage (12), le cinquième engrenage (12) est agencé de manière rotative au-dessus du contre-arbre (13), le sixième engrenage (6) est fixé à l'arbre de sortie (5), une partie d'entraînement du deuxième embrayage (11) est fixée au contre-arbre (13), et une partie entraînée du deuxième embrayage (11) est reliée au cinquième engrenage (12).

5. Système d'entraînement selon la revendication 1, dans lequel la troisième unité de transmission (B3) comporte :
un septième engrenage (9) disposé sur le contre-arbre (13), et
un huitième engrenage (4) disposé sur l'arbre de sortie (5) et en prise avec le septième engrenage (9),
dans lequel le septième engrenage (9) est agencé de manière rotative au-dessus du contre-arbre (13), le huitième engrenage (4) est fixé à l'arbre de sortie (5), une partie d'entraînement du troisième embrayage (10) est fixée au contre-arbre (13), et une partie entraînée du troisième embrayage (10) est reliée au septième engrenage (9).

6. Système d'entraînement selon la revendication 1, dans lequel les premier, deuxième et troisième embrayages (15, 11, 10) sont chacun un engrenage à huile.

7. Système d'entraînement selon la revendication 1, dans lequel le système hydraulique comporte :
une chambre d'huile (16) ;
une première boucle d'entraînement d'embrayage (L1) et une seconde boucle d'entraînement d'embrayage (L2) raccordées en parallèle l'une à l'autre, dans lequel la première boucle d'entraînement d'embrayage (L1) comporte un premier cylindre hydraulique (151) et une première vanne proportionnelle (32), la première vanne proportionnelle (32) est reliée au premier cylindre hydraulique (151) et à la chambre d'huile (16) respectivement, un piston du premier cylindre hydraulique (151) est relié à la partie d'entraînement du premier embrayage (15), la seconde boucle d'entraînement d'embrayage (L2) comporte un second cylindre hydraulique (111) et une seconde vanne proportionnelle (31), la seconde vanne proportionnelle (31) est reliée au second cylindre hydraulique (111) et à la chambre d'huile (16) respectivement, et un piston du second cylindre hydraulique (111) est relié à la partie d'entraînement du deuxième embrayage (11) ;
une pompe intérieure (18) entraînée par le contre-arbre (13) avec une entrée de celle-ci étant reliée à la chambre d'huile (16) et une sortie de celle-ci étant reliée aux première et seconde vannes proportionnelles (32, 31) respectivement ;
un premier clapet anti-retour (23) raccordé en série à la sortie de la pompe intérieure (18);
une pompe externe (20) entraînée par un moteur externe avec une entrée de celle-ci étant reliée à la chambre d'huile (16) et une sortie de celle-ci étant reliée aux première et seconde vannes proportionnelles (32, 31) respectivement ; et
un deuxième clapet anti-retour (22) raccordé en série à la sortie de la pompe externe (20), dans lequel le premier clapet anti-retour (23) et la pompe intérieure (18) raccordés en série l'un à l'autre sont raccordés en parallèle au deuxième clapet anti-retour (22) et à la pompe externe (20) raccordés en série l'un à l'autre entre la première vanne proportionnelle (32) et la seconde vanne proportionnelle (31).

8. Système d'entraînement selon la revendication 7, dans lequel le système hydraulique comporte en outre un troisième clapet anti-retour (19) raccordé en parallèle à la pompe intérieure (18).

9. Système d'entraînement selon la revendication 8, dans lequel le système hydraulique comporte en outre :
un premier filtre (17) étant raccordé entre la chambre d'huile (16) et les entrées de la pompe intérieure (18) et de la pompe externe (20), et
un second filtre (27) étant raccordé entre les premier et deuxième clapets anti-retour (23, 22), et les première et seconde vannes proportionnelles (32, 31).

10. Système d'entraînement selon la revendication 9, dans lequel le système hydraulique comporte en outre une soupape de décharge (21) raccordée en parallèle à une première série constituée du premier clapet anti-retour (23) et de la pompe intérieure (18) et à une seconde série constituée de la pompe externe (20) et du deuxième clapet anti-retour (22).

11. Système d'entraînement selon la revendication 7, dans lequel le système hydraulique comporte en outre un accumulateur (29) raccordé entre les premier et deuxième clapets anti-retour (23, 22) et les première et seconde vannes proportionnelles (32, 31).

12. Système d'entraînement selon la revendication 11, dans lequel la première boucle d'entraînement d'embrayage (L1) comporte en outre un premier tampon (38) disposé entre la première vanne proportionnelle (32) et le premier cylindre hydraulique (151), et la seconde boucle d'entraînement d'embrayage (L2) comporte en outre un second tampon (37) disposé entre la seconde vanne proportionnelle (31) et le second cylindre hydraulique (111).

13. Système d'entraînement selon la revendication 7, dans lequel le système hydraulique comporte en outre une vanne de régulation de pression (26) et un quatrième clapet anti-retour (24), la vanne de régulation de pression (26) est raccordée en parallèle à la pompe intérieure (18) pour fournir une huile lubrifiante au système d'entraînement, et le quatrième clapet anti-retour (24) est raccordé entre la pompe intérieure (18) et la sortie de la vanne de régulation de pression (26).
